# EUROPEAN PATENT APPLICATION

(11) **EP 3 480 489 A1**
(43) Date of publication of application: **08.05.2019**
(21) Application number: 18202524.7
(22) Date of filing: 25.10.2018
(51) Int. Cl.: F16F 15/08, F24B 1/02

(54) **SUPPORT DEVICE OF A GEARMOTOR OF A SOLID FUEL HEATING APPARATUS**

(30) Priority: 06.11.2017 IT 201700125677; 13.03.2018 IT 201800003517
(71) Applicant: MCZ Group S.p.A., 33074 Fontanafredda (PN) (IT)
(72) Inventor: DI BACCO, Alessandro, 33074 Fontanafredda (IT); GAVA, Paolo, 33074 Fontanafredda (IT); BARICORDI, Matteo, 33074 Fontanafredda (IT)
(74) Representative: Gonella, Mario

(57) **Abstract**

The present invention is relative to a support device (1) for a gearmotor (MR) on a heating apparatus using solid fuel. The gearmotor (MR) can be positioned between a drive shaft (AM) and a screw feeder of the solid fuel to the heating apparatus. The support device (1) comprises at least one mounting body (10) fitted with a first coupling portion (11) provided with first engagement holes (12), adapted to allow the coupling with the gearmotor (MR), and a second coupling portion (20) adapted to allow the coupling with the heating apparatus and provided with at least one through opening (21) configured to allow the passage of the drive shaft (AM). The first and the second coupling portion (11, 20) extend respectively on two parallel planes (P1, P2). The support device (1) also comprises damping fastening means (30) adapted to engage the first engagement holes (12) to dampen the stresses due to the torque and to the tangential forces acting, when in use, on said gearmotor (MR). The device also comprises a shaped drive cylinder (100) having an internal surface provided with at least one first plane portion (101) and adapted to be coupled with the drive shaft (AM), which is externally provided with at least a second plane portion (105) adapted to cooperate with the first plane portion (101) to transmit the rotational movement of the drive shaft (AM) to the shaped drive cylinder (100).

## Description

### TECHNICAL FIELD OF INVENTION

The present invention concerns a support device for a gearmotor adapted to be installed in a heating apparatus fed with solid fuel, and in particular a pellet stove or a boiler.

### BACKGROUND OF INVENTION

Heating apparatuses, such as in particular stoves or boilers, fed with solid fuel, for example wood or pellets, are well known and widely used for heating air and/or water in residential premises.

In particular, pellet-fuelled stoves or boilers are especially appreciated since the supply of the fuel and its lighting can be automated by means of timed charging and priming devices, thus considerably increasing the operating range of the equipment and reducing the necessity of intervention by the user.

These apparatuses normally comprise a containment structure that houses, respectively, a combustion chamber, a storage tank for the solid fuel and means of moving the fuel in the combustion chamber, for example in the form of an endless screw feeder.

Generally, said screw feeder is connected to a gearmotor suitable to ensure that the pellets are fed into the combustion chamber in a controlled manner, continuously or intermittently.

A gearmotor is in fact a device comprising an external housing wherein are housed appropriate mechanical means adapted to modulate the rotational speed of an input shaft, or drive shaft, and an output shaft, connected to the driven device, in this case the screw feeder, to which the gearmotor is coupled through appropriate means, such as a driving cylinder locked with a screw.

This device must therefore be suitably installed inside the stove or furnace holding structure so as to be interposed and perfectly aligned between the motor and the screw feeder, so that the drive motor allows the rotation of the screw without damaging with its movement the gears or the fastening devices of the gearmotor.

The fastening of the driving cylinder by means of a screw ensures a perfect coupling between the gearmotor shaft and the screw feeder shaft; however, the pressure exerted by the screw could nick and deform the screw feeder shaft, thus weakening and modifying its resistant section.

Moreover, the screw must be loosened every time it becomes necessary to carry out a maintenance or a replacement of the gearmotor. This operation could prove cumbersome if the orientation of the gearmotor is such as to make it difficult for the maintenance operator to access the screw, or if other components hinder its accessibility.

Customarily, the installation of the gearmotor was carried out through the use of screws suitable for anchoring it, either directly or through the interposition of an installation flange, to the stove holding structure, at the four fastening points to limit all the degrees of freedom and thus achieve a static or even a hyperstatic fastening connection.

Although this type of fastening is functional in the normal conditions of operation of the stove, making it possible to suitably counter the torque transmitted by the drive shaft to the screw feeder without causing damage to the gearmotor, it was not efficient in countering the "tangential" stresses caused by eccentric forces that are generated in particular when pellet fragments become lodged in the screw feeder and wear down the internal gears of the gearmotor to the point of breaking them.

Nowadays, therefore, a non-static fastening constraint is preferred, by resorting to only the connection between the gearmotor shaft and the screw feeder through the driving cylinder.

Since this constraint is not static, the stresses due to the tangential strains do not have a negative feedback: the gearmotor is thus free to move, and consequently the internal gears are not damaged in any way.

However, this freedom of movement allows the rotation of the gearmotor around the shaft itself: it thus becomes necessary to use at least one additional lateral installation bracket, suitable to prevent the rotational movement of the gearmotor.

This type of fastening involves therefore an encumbrance outside the gearmotor itself, and in time the lateral installation bracket could suffer wear and damage.

In addition, if the gearmotor is designed to have the shaft turning in the two directions of rotation, at least two installation brackets must be provided arranged on opposite sides of the gearmotor so as to limit the rotations in both directions.

Generally, the installation brackets of known type are formed from metal bodies having different shapes and dimensions from model to model, defining suitable fastening surfaces arranged and configured so as to maintain the drive shaft of the gearmotor in position and determine the orientation or positioning of the gearmotor inside the available volume.

It follows, therefore, that, for different models of stoves or furnaces in which the volumes and the internal spaces available are different, it will be necessary to have installation brackets having different geometries.

In fact, a gearmotor generally has a main extension, which characterizes its largest encumbrance, a secondary extension, of smaller dimensions, and a third extension that coincides with the axis of the drive shaft.

Therefore, once the direction of the motor shaft is established, different orientations of the other two axes are possible, depending on the position in which the gearmotor is to be arranged in its assigned space. Clearly, for each position of the gearmotor it is necessary to use suitably shaped installation brackets.

Consequently, the installation of the gearmotor must be studied from time to time to adapt it to the different internal geometries of the stoves or furnaces in which it is to be installed, and to the spaces available in which to house it, which depend essentially on the size of the stove and on the design of the specific selected model.

It would instead by desirable, and in fact it is the main objective of the present invention, to implement a support device of a gearmotor in a heating apparatus which is universal, that is, one that can be used independently of the positioning orientation of the gearmotor, guaranteeing at the same time the functionality required for its specific use.

In the scope of the above objective, one purpose of the present invention is to provide a support device for a gearmotor in a heating apparatus that is sufficiently compact, simple to make and handy to use.

A further objective of the present invention is to realize a support device for a gearmotor that is capable of effectively countering the moments generated both under normal operating conditions and also in the event of eccentric or tangential forces, preventing the possibility of damage occurring to the internal gears of the gearmotor.

Another objective is to allow an easy installation on and removal of the gearmotor from the support device without the use of screws, or other removable fastening means, between the gearmotor drive shaft and the screw feeder shaft.

One not least important objective is to devise a support device for a gearmotor capable of achieving the above task and purposes at an economically convenient cost obtained through the usual, well-known plants, machinery and equipment.

The above task and purposes, and others that will become more evident later, are achieved with a support device for a gearmotor as defined in claim 1.

### BRIEF DESCRIPTION OF THE FIGURES

Advantages and characteristics of the invention will become evident from the description which follows, given by way of non-limiting example, with reference to the enclosed figures, in which:
- figures 1A and 1B illustrate, with perspective views respectively lateral in elevation and from below, a component element of a support device for a gearmotor according to the present invention;
- figures 2A and 2B illustrate, respectively in a side view and a plan view, the component element of a support device for a gearmotor according to the present invention;
- figure 3 illustrates, with a perspective view, a second component element of a support device for a gearmotor according to the present invention;
- figure 4A illustrates, with a side view, the component element of figure 3;
- figure 4B illustrates the component element of figure 4A in cross section along plane A-A;
- figure 5 illustrates, with a perspective view, a support device according to the present invention when associated to a gearmotor;
- figures 6A and 6B illustrate, respectively in a perspective view and a plan view, a variant embodiment of a component element of a support device according to the present invention;

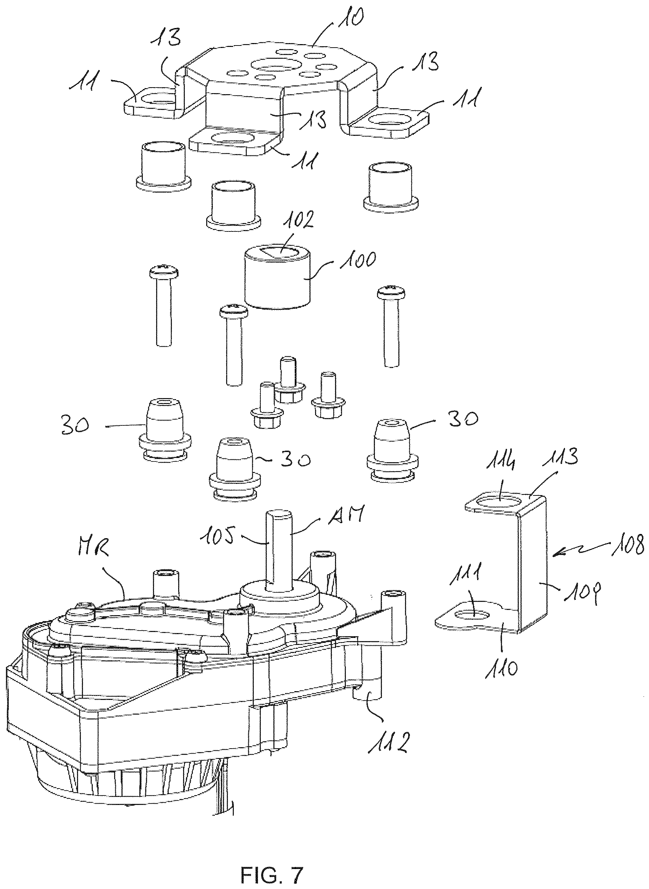

- figure 7 is an exploded view of a variant embodiment of the gearmotor and support device assembly;
- figures 8 and 9 illustrate a component of the variant embodiment of figure 7, respectively in a perspective view and a split view;

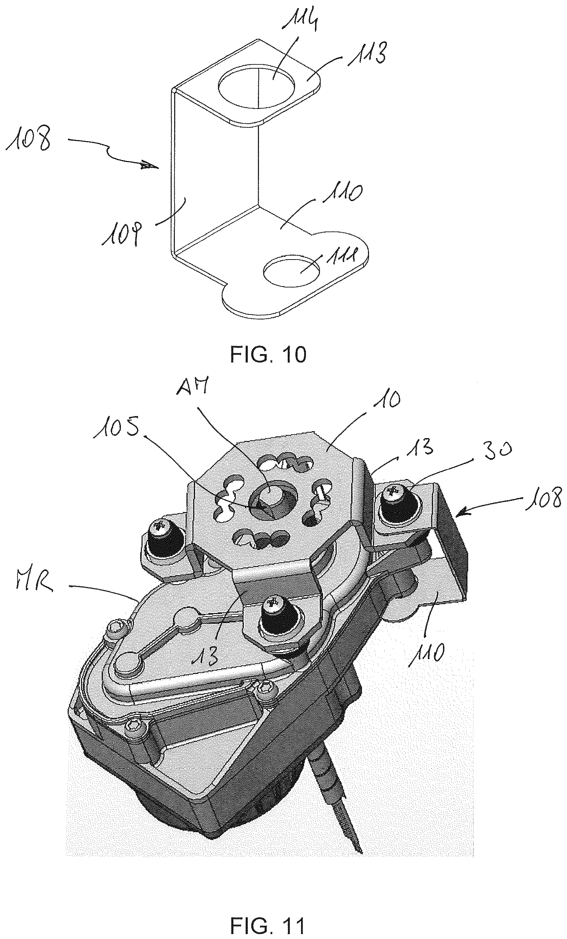

- figure 10 illustrates, in a perspective view, another component of the variant embodiment of figure 7;
- figure 11 illustrates the variant embodiment of figure 7 in the assembled configuration;
- figure 12 is a cross sectional view of the coupling between the gearmotor shaft and the feeding screw shaft;
- figure 13 is a detail viewed in perspective of the cross section along plane A-A of figure 12.

### DETAILED DESCRIPTION OF THE INVENTION

The present invention concerns a support device 1 for a gearmotor MR in a heating apparatus, such as a solid-fuel stove or boiler; in particular, said support device 1 is adapted to allow the installation of said gearmotor MR to the structure containing said heating apparatus in a manner whereby said gearmotor is interposed between a drive shaft and an endless screw feeding the solid fuel.

According to an advantageous characteristic of the present invention, said support device 1 comprises substantially a mounting body 10 and at least one pair of damping fastening means 30.

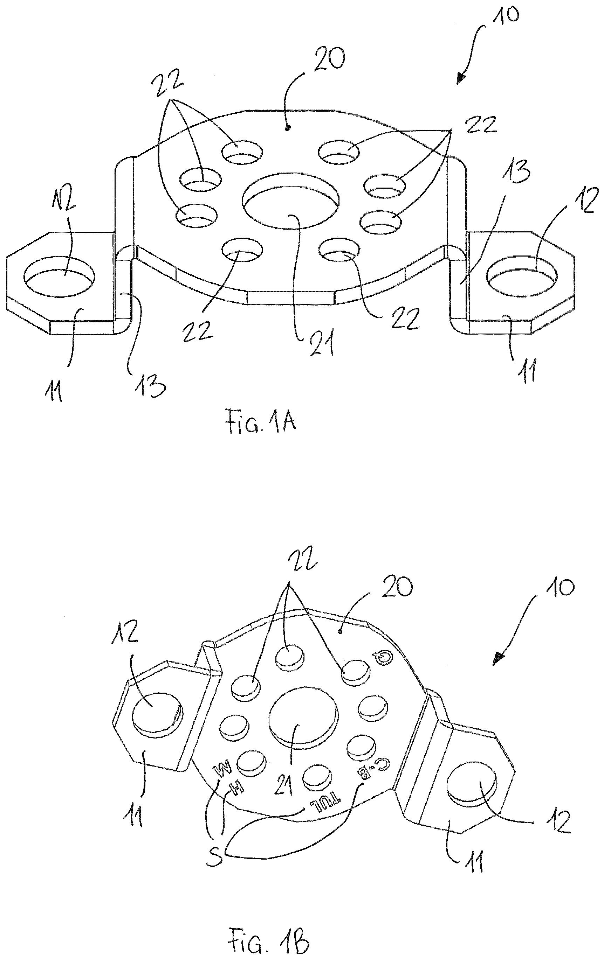

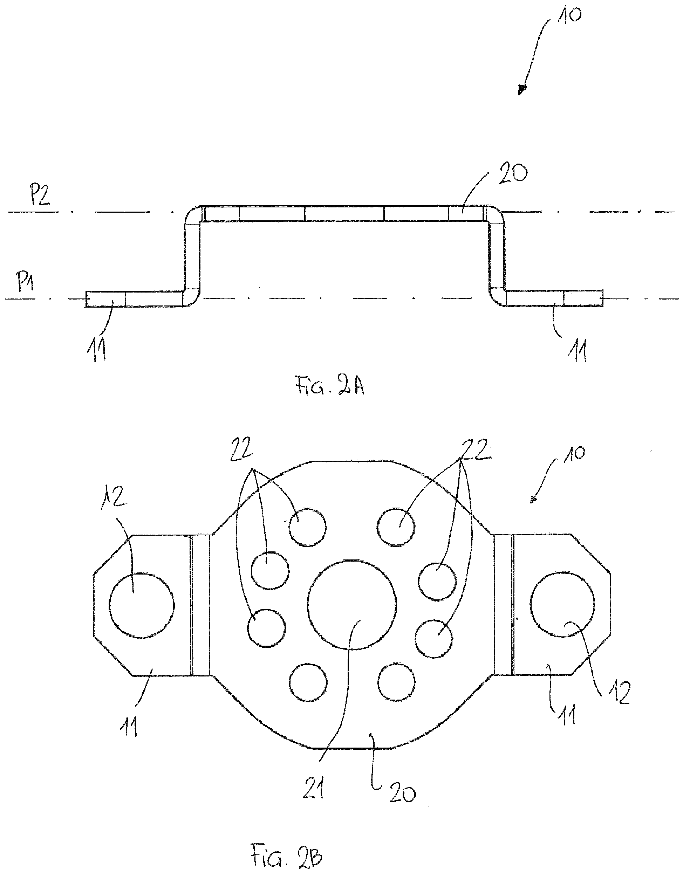

With reference in particular to figures 1A, 1B and 2A, 2B, is illustrated said mounting body 10: said body 10 is preferably formed from a single piece of metal, and defines a first coupling portion 11, designed to achieve the coupling between said mounting body 10 and the external casing of the gearmotor MR, and a second coupling portion 20 designed instead to suitably fasten said mounting body 10, and consequently also said gearmotor MR mounted on it, to the structure housing the heating apparatus.

According to a distinctive characteristic of the present invention, said mounting body 10 is is substantially structured on two parallel planes P1, P2: in particular, as can better be seen in figure 2A, said first coupling portion 11 lies on a first plane P1, while said second coupling portion 20 lies on a second plane P2, parallel to said first plane P1.

Said first coupling portion 11 is preferably defined by at least one pair of separate, flat and bidimensional flaps, each of which is provided with a corresponding first engagement hole 12 of essentially circular shape, said first engagement hole 12 being adapted to be used by said damping fastening means 30 to allow the coupling of said body 10 with said gearmotor MR.

Said second coupling portion 20 is instead advantageously formed by a flat bidimensional plate, preferably of circular or polygonal shape, on which is formed at least one through opening 21, located substantially centrally with respect to its extension, configured to allow the passage of the drive shaft AM when said mounting body 10 is associated to said gearmotor MR.

Said flat plate 20 also comprises a plurality of second engagement holes 22, arranged circumferentially with respect to said through opening 21, and adapted to allow the insertion of fastening means for fastening said body 10 to the structure housing the heating apparatus.

Suitable connecting portions 13 extending between said two parallel planes P1, P2, preferably at right angles to the same, connect the flaps that form said first portion 11 to opposite edges of said flat plate 20.

According to an advantageous characteristic of the invention, said second engagement holes 22 are distributed so as to allow the fastening of said mounting body 10 to the structure housing the heating apparatus with different orientations, in order to allow the positioning of said gearmotor MR associated to it in the most suitable manner, based on the internal geometry of the heating apparatus, while maintaining the central position of said through opening 21 and thus the perfect alignment of the axis of the drive shaft.

For this purpose, advantageously, suitable markings S can be provided on said flat plate 20, near one or more of said second engagement holes 22, to point out to the user the ones that should be used for the correct orientation of the gearmotor MR installed in that specific condition.

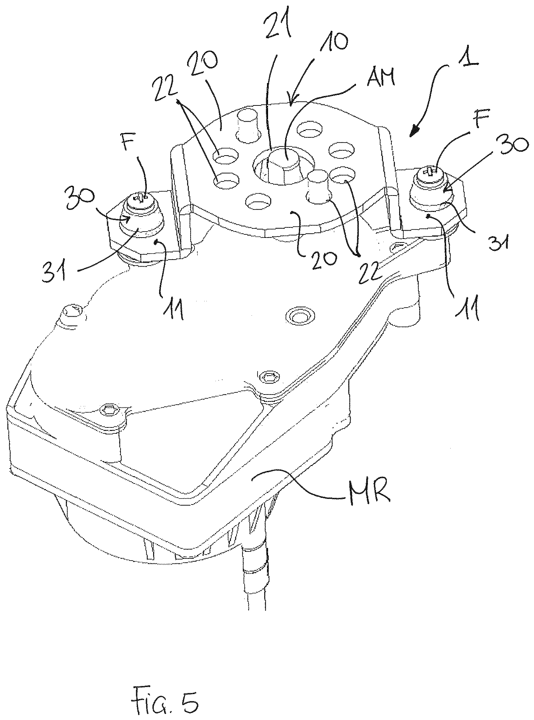

Figure 5 illustrates the connection of said mounting body 10 with said gearmotor MR: as already mentioned, this connection is achieved advantageously through the use of damping fastening means 30 adapted to engage first engagement holes 12 formed on each flap of said first coupling portion 11.

Advantageously, as can be seen in figure 5, said mounting body 10 is configured so that the drive shaft AM of said gearmotor MR is arranged in a central position with respect to said pair of damping fastening means 30.

Preferably, said damping fastening means 30 each comprise a shell 31, preferably made of elastically deformable, or if necessary plastically deformable material, and a conventional fixing means F, such as a screw, advantageously tightened in a known manner through a relative tightening nut (not visible in the figures).

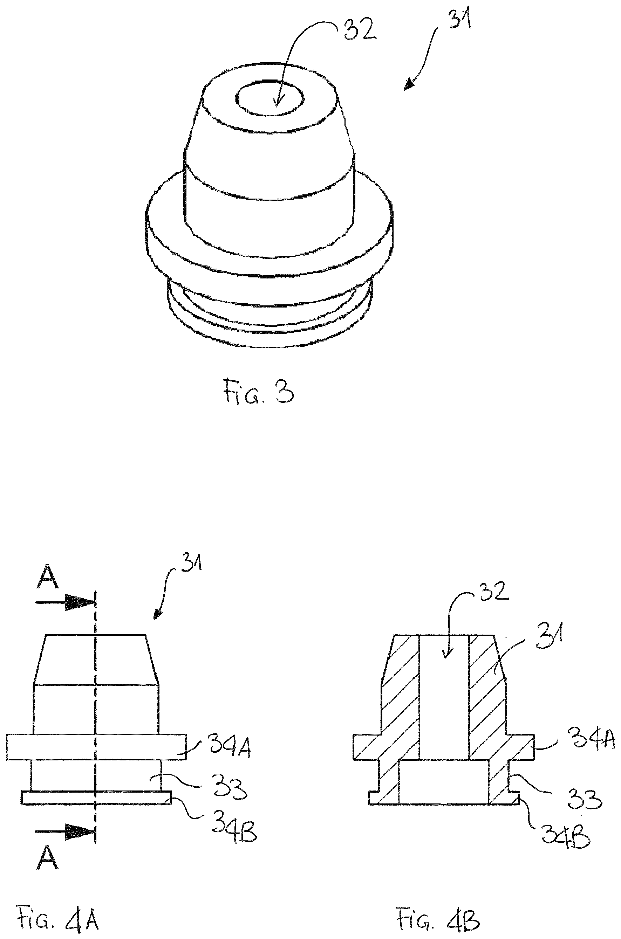

As shown in figures 3, 4A and 4B, said shell 31 is provided with a through axial channel 32 which allows the insertion of said screw F and defines a seat for housing the corresponding tightening nut.

Advantageously, on the outer surface of said shell 31 is formed a radial groove 33, preferably defined between a pair of abutting circumferential fins 34A, 34B, adapted to cooperate with the edge of the respective first engagement hole 12 to hold said shell 31 in position on said first coupling portion 11.

The coupling of the body 10 with the gearmotor MR is then achieved by inserting said screw F inside the through channel 32, and the subsequent tightening of the relative nut, which determines a compression of said shell 31 and therefore an increase of its external diameter, in such a way as to obtain an optimal coupling by interference fit of the latter in the corresponding first engagement hole 12.

In this manner, advantageously, any stresses generated by the torsional moment due to a counter-reaction to the motor torque that are transmitted by the gearmotor MR to the mounting body 10 are essentially absorbed, or damped down, by the elastically deformable material that forms said shells 31, without thereby interfering on the direction of the axis of the drive shaft that thus is maintained aligned.

In the same manner, any tangential stresses that are generated by the presence of pellet fragments that accidentally lodge in the screw feeder are also absorbed or damped by the elastically deformable material forming said shells 31.

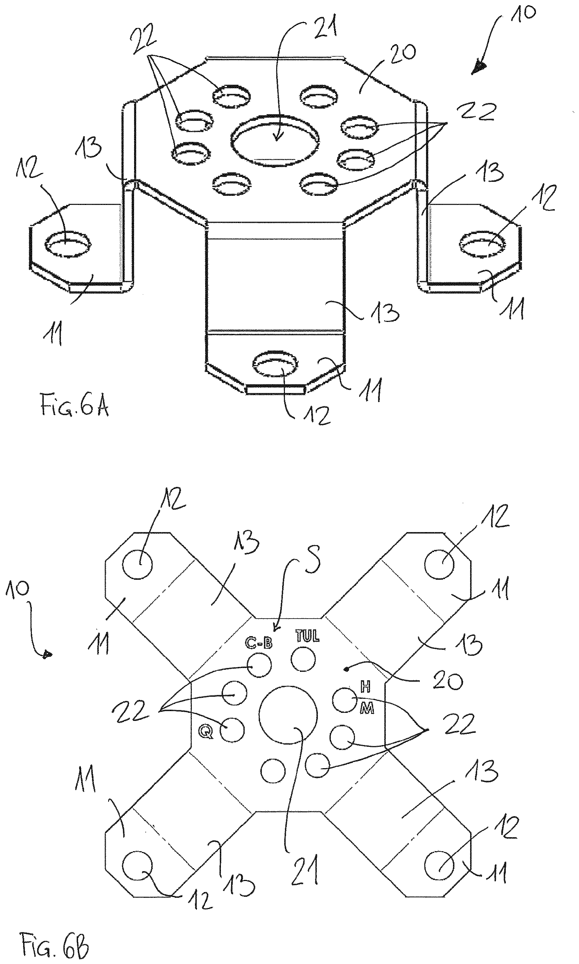

In figures 6A and 6B is illustrated a variant embodiment of a support device 1 according to the present invention, advantageous if there are four fastening points between said mounting body 10 and said gearmotor M: in this case, the first coupling portion 11 of said mounting body 10 is formed by two pairs of distinct and separate flaps, lying on a first plane P1, each provided with a first engagement hole 12 engageable by a respective damping fastening means 30, and connected through connecting portions 13 to respective opposite sides of the flat plane forming said second coupling portion 20, lying on a second plane P2 parallel to the first plane P1.

With reference to figures from 7 to 13 is illustrated a further advantageous characteristic of the present invention, which makes it possible to achieve an easy installation and removal of the gearmotor screws on the support device. This solution, which will be described in detail below, is particularly advantageous when the variant embodiment of the mounting body 10 illustrated in figures 6A and 6B is used, since the access to a locking screw of a driving cylinder, as provided in the prior art to achieve the coupling between the gearmotor shaft and the screw feeder shaft is complicated by the presence of the four connecting portions 13.

For this purpose, a shaped drive cylinder 100 is provided in which the internal surface comprises at least one first plane portion 101 that extends along the whole longitudinal extension of the cylinder 100, which has, at one end, a first shaped opening 102 and, at the opposite end, a second shaped opening 103 of smaller width due to the presence of a circular-sector abutment ring 104.

The gearmotor shaft AM comprises, on the external surface, at least one second plane portion 105 adapted to cooperate with the first plane portion 101 of the shaped drive cylinder 100 to make the shaft AM integral with the shaped drive cylinder 100 and transmit the rotation of the shaft AM to the cylinder 100. For this purpose, the gearmotor shaft AM can be connected, by a simple insertion, with the shaped drive cylinder 100 in the second shaped opening 103 so that the respective plane portions 101 and 105 are arranged facing each other.

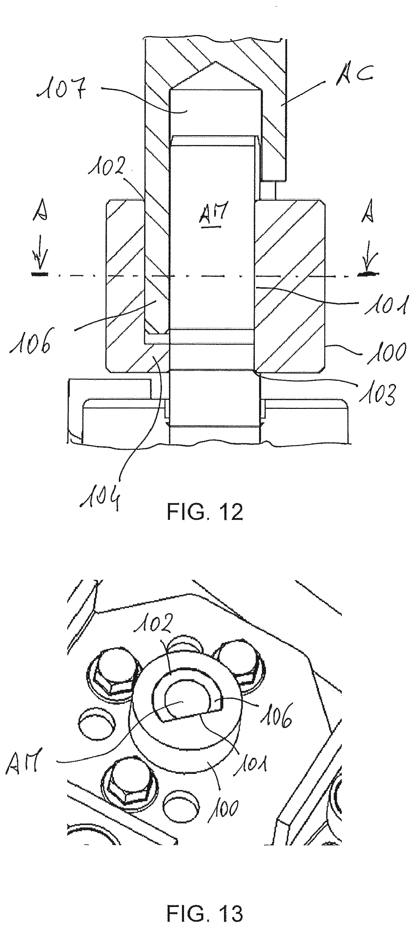

The shaft AC of the screw feeder is provided with an appendix 106 having a cross section like a circular sector that extends beyond the end part of the shaft AC. The connection of the shaft AC to the shaped drive cylinder 100 is achieved by simply inserting the appendix 106 into the interspace that countervails the shape of the appendix 106 that is formed between the internal circular surface of the cylinder 100 and the external surface of the gearmotor shaft AM, as shown in figures 12 and 13. The interaction of the edges of the appendix 106 with the first plane portion 101 of the cylinder 100 makes it possible to make the screw feeder shaft AC integral with the drive cylinder 100, transmitting in this manner the rotational movement of the gearmotor shaft AM to the screw feeder shaft AC through the shaped drive cylinder 100.

The screw feeder shaft AC can be provided with an internal cavity 107 to house the gearmotor shaft AM. This internal cavity 107 has preferably a circular cross section, since the production of an internal shaped surface for a drive shaft requires complex and extremely costly machining processes.

The interposition of the shaped drive cylinder 100 between the gearmotor shaft AM and the screw feeder shaft AC, and the cooperation between the respective plane portions, thus makes it possible to transmit the rotational motion from the gearmotor to the feeding screw without requiring the use of screws or other locking systems, as the two shafts are simply inserted inside the drive cylinder without any fastening means.

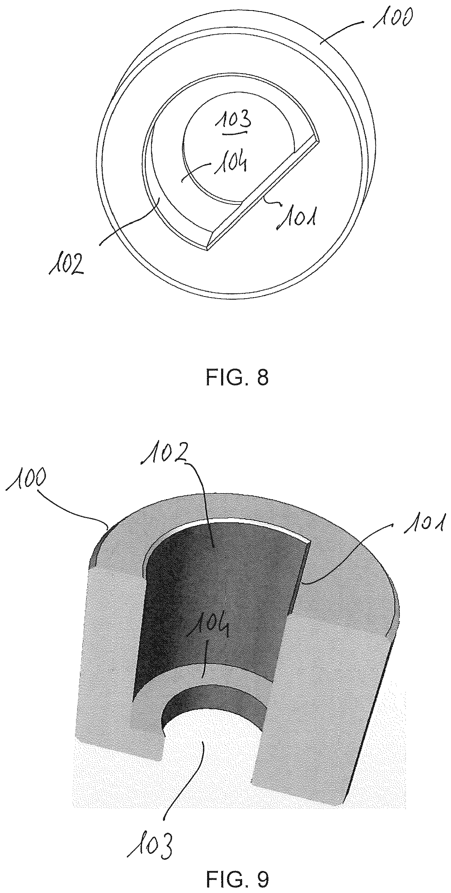

Naturally, the internal section of the shaped drive cylinder 100 can have only one plane portion 101, as shown by way of example in figures 8 and 9, or two or more plane portions so as to form for example a square or a polygon. Naturally, the external surface of the gearmotor shaft and the appendix of the screw feeder shaft will have to have a shape counterpoised to the geometrical shape of the internal cross section of the cylinder 100.

If it becomes necessary to maintain the axial alignment between the gearmotor shaft AM and the feeding-screw shaft AC, and to avoid the accidental extraction of the former, advantageously, an elastic containment bracket 108 is provided having essentially a "C" shape and comprising a bar 109 from which extend, at the respective ends, a pair of elastically deformable arms, the first of which 110 being provided with a prearranged opening 111 engageable with a pin 112 projecting from the external housing of the gearmotor MR and a second arm 113 being provided with a prearranged opening 114 engageable with one of the damping means 30. The second arm 113 is arranged, once installed, above one of the flaps of the body 10 forming the first connecting portion 11 so as to hold the body in place 10.

The connection of the elastic containment bracket 108 to the pin 112 and to one of the damping means 30, through the elastic deformation of the arms 110 and 113, maintains the body 10 and the gearmotor MR clamped to each other so as to guarantee the axial alignment between the gearmotor shaft and the screw feeder shaft.

In conclusion, from the above it is evident how a support device 1 for a gearmotor MR according to the present invention makes it possible to achieve the initially foreseen purposes and advantages.

In fact, thanks to the synergic use of damping fastening means 30 in the connection between the mounting body 10 and the gearmotor MR, and to the advantageous configuration of the mounting body 10 provided with two coupling portions 11, 20 extending respectively on parallel planes, a support device 1 according to the present invention is capable of effectively dampening the stresses due to both the torsional moment and the tangential forces impinging, when in use, on said gearmotor MR, and to thereby prevent them from interfering in any way with the operation of the internal gears of the gearmotor, resulting at the same time in a rather compact apparatus.

Consequently, this allows the greatest assembling flexibility, effectively making the support device 1 universal, that is, suitable for being used for supporting a gearmotor MR on the housing structure of any heating apparatus, independently of the specific positioning orientation required.

It is also evident how the installation and removal of the gearmotor on the support device and the connection between the gearmotor shaft and the screw feeder shaft are extremely facilitated, thanks to the presence of the shaped drive cylinder 100 and, advantageously, to the elastic containment bracket 108, which makes it possible to achieve a connection without the use of screws, with a solidity equivalent to the prior art coupling with a fastening screw on the drive cylinder, but without the difficulty of accessing the screw. To separate the gearmotor from the support, it is in fact sufficient, after having freed the flaps of the first coupling portion 11 from the fixing screws F, easily accessible for the operator, to remove the elastic bracket 108, if present, by elastically deforming the arms 110, 113, to pull the body 10 out of the dampening means 30, and to extract the shaped drive cylinder 100 from the gearmotor shaft.

Moreover, as will be evident to an expert in the field, a support device for a gearmotor according to the present invention is contained within the plan dimensions of the gearmotor itself, as the invention does not foresee any fastening portions projecting laterally from the same.

In the foregoing description terms such as "over", "under", "upper", "lower", "high", "low", "horizontal", "vertical" or the like have been used; the expert in the field will have no difficulty understanding that such terms refer to a support device 1 according to the present invention when in use, as represented in the enclosed figures.

Naturally, the present invention is open to many applications, modifications or variants without departing from the scope of patent protection, as defined by the attached claims. In addition, the materials and the equipment used for implementing the present invention, as well as the shapes and dimensions of the individual components, may be the most appropriate for the specific requirements.

## Claims

1. Support device (1) of a gearmotor (MR) of a heating apparatus fed with solid fuel, said gearmotor (MR) being adapted to be arranged between a drive shaft and a solid-fuel screw feeder of said heating apparatus, **characterized in that** it comprises at least a mounting body (10) provided with a first coupling portion (11) having first engagement holes (12) and adapted to allow a coupling with said gearmotor (MR), and a second coupling portion (20) adapted to allow a coupling with said heating apparatus and provided with at least a through opening (21) configured to allow the insertion of said drive shaft, said first and said second coupling portion (11, 20) extending respectively on parallel planes (P1, P2), said support device (1) further comprising damping fastening means (30) adapted to engage said first engagement holes (12) to dampen the stresses due to the torque and to the tangential forces acting, when in use, on said gearmotor (MR).

2. Support device (1) according to claim 1, wherein said first coupling portion (11) is formed by at least one pair of distinct, bidimensional and flat flaps, each of which being provided with a corresponding hole of said first engagement holes (12).

3. Support device (1) according to any one of claims 1 or 2, wherein said second coupling portion (20) is formed from a flat plate, of circular or polygonal shape, said through opening (21) being placed in a substantially central area of said plate (20).

4. Support device (1) according to any of the previous claims, wherein said second coupling portion (20) also comprises a plurality of second engagement holes (22), arranged circumferentially with respect to said through opening (21), and adapted to allow a through insertion of fastening means for anchoring said mounting body (10) to said heating apparatus.

5. Support device (1) according to any of the previous claims, wherein connecting portions (13) extending between said two parallel planes (P1, P2) are provided for connecting said first coupling portion (11) to said second coupling portion (20).

6. Support device (1) according to any of the previous claims, wherein said damping fastening means (30) each comprise a shell (31), made of elastically deformable material, and fixing means (F) formed from a screw and a tightening nut, said shell (31) being provided with a through axial channel (32) adapted to allow the insertion of said screw and defining a seat for housing said tightening nut.

7. Support device (1) according to claim 6, wherein on the outer surface of said shell (31) a radial groove (33) adapted to cooperate with the edge of a respective first engagement hole (12) is obtained in order to retain said shell (31) on said first coupling portion (11).

8. Support device (1) according to claim 1, further comprising a shaped drive cylinder (100) having an internal surface provided with at least one first plane portion (101), said shaped drive cylinder (100) being connectable to said drive shaft (AM) externally provided with at least one second plane portion (105) adapted to cooperate with said first plane portion (101) to transmit the rotational motion of said drive shaft (AM) to said shaped drive cylinder (100).

9. Support device (1) according to claim 1, wherein said first coupling portion (11) is formed from two pairs of distinct flaps, each of said distinct flaps being connected to said second connecting portion (20) through a respective connecting portion (13) extending between said two parallel planes (P1, P2).

10. Support device (1) according to claim 8, wherein said first plane portion (101) extends along the whole extension of said shaped drive cylinder (100).

11. Support device (1) according to claim 10, wherein said shaped drive cylinder (100) comprises, at one end, a first shaped opening (102) and, at the opposite end, a second shaped opening (103) provided with an abutment ring (104), said second shaped opening (103) being of smaller width with respect to said first shaped opening (102).

12. Support device (1) according to claim 11, wherein said drive shaft (AM) can be inserted into said second shaped opening (103) so that said second plane portion (105) faces said first plane portion (101).

13. Support device (1) according to claim 12, wherein said screw feeder is provided with a shaft (AC) comprising an appendix (106) that extends beyond the terminal part of said shaft (AC), said appendix (106) being adapted to be inserted into said first shaped opening (102) in the interspace existing between the inside surface of said shaped drive cylinder (100) and the external surface of said drive shaft (AM).

14. Support device (1) according to claim 13, wherein the edges of said appendix (106) are adapted to cooperate with said first plane portion (101) so as to make the screw feeder shaft (AC) integral with said shaped drive cylinder (100).

15. Support device according to any of the preceding claims, further comprising an elastic containment bracket (108) comprising a bar (109) from which protrude, at the respective ends, an elastically deformable first arm (110) engageable with said gearmotor (MR) and an elastically deformable second arm (113) engageable with one of said damping fastening means (30), said second arm (113) being adapted to retain one of said flaps of said first coupling portion (11).
